# EUROPÄISCHE PATENTSCHRIFT

(11) **EP 2 904 130 B1**
(45) Veröffentlichungstag und Bekanntmachung des Hinweises auf die Patenterteilung: **22.05.2019**
(21) Anmeldenummer: 13765705.2
(22) Anmeldetag: 18.09.2013
(51) Int. Cl.: C23C 28/00, F01D 5/28

(54) **WÄRMEDÄMMSCHICHT, GASTURBINENBAUTEIL UND VERFAHREN ZUR BESCHICHTUNG EINES GASTURBINENBAUTEILS**
THERMAL BARRIER LAYER, GAS TURBINE COMPONENT, AND METHOD OF COATING A GAS TURBINE COMPONENT
COUCHE DE BARRIÈRE THERMIQUE, COMPOSANT D'UNE TURBINE À GAZ ET PROCÉDÉ DE REVÊTEMENT D'UN COMPOSANT D'UNE TURBINE À GAZ

(30) Priorität: 05.10.2012 DE 102012218198
(43) Veröffentlichungstag der Anmeldung: 12.08.2015
(73) Patentinhaber: Lufthansa Technik AG, 22335 Hamburg (DE)
(72) Erfinder: PETERS, Jan Oke, 22339 Hamburg (DE); GARTNER, Thomas, 22087 Hamburg (DE); EICH, Manfred, 21224 Rosengarten (DE); KUBRIN, Roman, 8051 Zürich (CH); LEE, Hooi Sing, 80802 München (DE); PETROV, Alexander, 21073 Hamburg (DE)
(74) Vertreter: Müller Verweyen
(86) Internationale Anmeldenummer: PCT/EP2013/069362
(87) Internationale Veröffentlichungsnummer: WO 2014/053321

(56) Entgegenhaltungen:
- EP-A1- 2 450 465
- WO-A1-2012/116286
- DE-U1- 20 311 944
- KELLY M J ET AL: "Thermal barrier coatings design with increased reflectivity and lower thermal conductivity for high-temperature turbine applications", INTERNATIONAL JOURNAL OF APPLIED CERAMIC TECHNOLOGY, Bd. 3, Nr. 2, März 2006 (2006-03), Seiten 81-93, XP008150519, Blackwell Publishing, Malden, MA [US] ISSN: 1546-542X, DOI: 10.1111/j.1744-7402.2006.02073.x
- LEE H S ET AL: "Thermal radiation transmission and reflection properties of ceramic 3D photonic crystals", JOURNAL OF THE OPTICAL SOCIETY OF AMERICA B, Bd. 29, Nr. 3, 24. Februar 2012 (2012-02-24), Seiten 450-310, XP055095138, The Optical Society of America, Washington, DC [US] ISSN: 0740-3224, DOI: 10.1364/JOSAB.29.000450
- KUBRIN R ET AL: "Stacking of Ceramic Inverse Opals with Different Lattice Constants", JOURNAL OF THE AMERICAN CERAMIC SOCIETY, Bd. 95, Nr. 7, 27. März 2012 (2012-03-27), Seiten 2226-2235, XP055095476, Blackwell Publishing, Malden, MA [US] ISSN: 0002-7820, DOI: 10.1111/j.1551-2916.2012.05156.x

## Beschreibung

Die Erfindung betrifft eine Wärmedämmschicht für ein Gasturbinenbauteil mit mehreren übereinander angeordneten Schichtlagen sowie ein Gasturbinenbauteil mit einer entsprechenden Wärmedämmschicht und ein entsprechendes Verfahren zur Beschichtung eines Gasturbinenbauteils.

Das Aufbringen von Wärmedämmschichten auf Gasturbinenbauteile, auch TBCs (thermal barrier coatings) genannt, ist eine übliche Vorgehensweise, um durch die thermische Isolationswirkung der Wärmedämmschichten die Gasturbinenbauteile vor einem vorzeitigen Versagen zu schützen.

Nichtsdestotrotz führen die hohen thermischen Belastungen immer wieder zu einer verkürzten Lebensdauer der Bauteile. Insbesondere im Falle von Flugzeugturbinen, die in heißen Ländern eingesetzt werden, kann es zu einem solchen frühzeitigen Versagen der Bauteile kommen. Ein verfrühter Ausfall ist mit hohen wirtschaftlichen Schäden verbunden, da die Bauteile teils aufwendig ausgebaut und ausgetauscht werden müssen.

Generell besteht immer das Bestreben, die Temperaturen in dem Brennkammerbereich von Gasturbinen möglichst hoch einzustellen, da die Gasturbinen so effizienter arbeiten können und dadurch Treibstoff eingespart werden kann.

Wärmedämmschichten können jedoch nicht beliebig dick ausgeführt werden, da dicke Schichten dazu neigen abzuplatzen. Daher besteht das Bestreben, die isolierende Wirkung der Beschichtung bei gleicher oder ähnlicher Dicke zu verbessern.

Eine Möglichkeit dies zu erreichen ist beispielsweise in der DE 10 2008 007 870 A1 beschrieben. Aus dieser Druckschrift ist es bekannt, Wärmedämmschichten mit dünnen funktionalen Schichten durch atmosphärisches Plasmaspritzen und/oder Suspensions-Plasmaspritzverfahren so auszubilden, dass sie eintreffende Wärmestrahlung zum Teil reflektieren.

Weiter ist in der EP 2 450 465 A1 ein Schichtsystem für Gasturbinenkomponenten mit mehreren keramischen Schichten offenbart, wobei auf einem Substrat eine Anbindungsschicht aufgebracht ist. Auf der Anbindungsschicht ist dann eine keramische Schicht angeordnet, gefolgt von einer mittig liegenden keramischen Schicht und einer äußeren Pyrochlorschicht.

Aus KELLY Matthew J., et al. (Thermal Barrier Coarings Design witch Increased Reflectivity and Lower Thermal Conductivity for High-Temperature Turbine Applications. International journal of applied ceramic technology, 2006, 3. Jg., Nr. 2, S. 81 - 93.) ist eine Mehrschichtanordnung aus abwechselnden Lagen von Aluminiumoxid und Zirconiumoxid beschrieben, die eine hohe Reflexionseigenschaft im infraroten Spektrum aufweist.

Weiter ist der Einsatz von photonischen Kristallen mit einer invertierten Opalstruktur bei Gasturbinen aus LEE Hooi Sing, et al. (Thermal radiation transmission and reflection properties of ceramic 3D photonic crystals. JOSA B, 2012, 29. Jg., Nr. 3, S. 450-457.) bekannt.

Es existieren demnach bereits verschiedene Möglichkeiten Wärmedämmschichten so auszugestalten, dass sie höhere Temperaturen in der Brennkammer von Gasturbinen realisieren. Jedoch besteht stets Bedarf an weiterentwickelten Wärmedämmschichten, die eine noch weiter verbesserte Wirkung aufweisen und somit noch höheren Temperaturen widerstehen können. Insbesondere besteht ein Bedarf an Gasturbinenbauteilen, die nicht frühzeitig versagen und die sich besonders gut für den Einsatz in Flugzeugturbinen in heißen Weltregionen eignen.

Der Erfindung liegt demnach die Aufgabe zugrunde, eine Wärmedämmschicht, ein Gasturbinenbauteil und ein entsprechendes Verfahren zur Beschichtung eines Gasturbinenbauteils bereitzustellen, bei denen die zuvor beschriebenen Probleme reduziert sind.

Die Erfindung löst diese Aufgabe mit den Merkmalen der unabhängigen Ansprüche. Somit wird zur Lösung der Aufgabe eine Wärmedämmschicht für ein Gasturbinenbauteil mit mehreren übereinander angeordneten Schichtlagen vorgeschlagen, wobei die Wärmedämmschicht ausgehend vom Grundwerkstoff des Gasturbinenbauteils nacheinander die Schichtlagen
a) eine metallische Haftschicht
b) eine poröse keramische Zwischenschicht
c) eine Reflexionsschicht
d) eine keramische Topschicht
aufweist, wobei die Reflexionsschicht durch einen photonischen Kristall aus keramischem Material gebildet ist, der periodische Strukturen globularer Hohlkörper (9) mit einer invertierten Opalstruktur aufweist.

Nacheinander bedeutet dabei nicht, dass die Schichtlagen zwangsläufig direkt unmittelbar aufeinanderfolgen und aneinandergrenzend vorgesehen werden. Eine solche Ausführungsform ist bevorzugt, es können jedoch auch noch weitere Schichten zwischen den Schichtlagen vorgesehen werden, so dass es insgesamt mehr als nur vier Schichtlagen gibt. Die erfindungsgemäße Reihenfolge der Schichtlagen a) bis d), ausgehend vom Grundwerkstoff, bleibt jedoch auch bei noch weiteren Schichten erhalten.

Das Vorsehen einer Reflexionsschicht mit einem photonischen Kristall aus einem keramischen Material verleiht der Wärmedämmschicht verbesserte wärmedämmende Eigenschaften, da ein signifikanter Anteil von Wärmestrahlung von der Wärmedämmschicht reflektiert wird. Das Grundwerkstoffmaterial wird somit besser vor der thermischen Belastung geschützt.

Unter einem photonischen Kristall sind strukturierte Materialsysteme zu verstehen, die unter anderem durch Beugung und Interferenz die Bewegung von Photonen beeinflussen. Erfindungsgemäß handelt es sich um periodische Strukturen, die globulare Hohlkörper umfassen.

Durch den photonischen Kristall kann die auf das Gasturbinenbauteil einwirkende Wärmestrahlung reflektiert werden. Insbesondere durch die Anordnung des photonischen Kristalls zwischen der porösen keramischen Zwischenschicht und der porösen keramischen Topschicht ist die erfindungsgemäße Wärmedämmschicht gut für Gasturbinenbauteile geeignet. Denn bei einem Schaden der Reflexionsschicht gewährleistet die darunterliegende Zwischenschicht, dass das Gasturbinenbauteil weiterhin geschützt ist. Somit zeichnet sich die erfindungsgemäße Wärmedämmschicht durch gute Notlaufeigenschaften aus.

Vorzugsweise ist das Verhältnis der Topschichtdicke zur Zwischenschichtdicke kleiner als 0,5, bevorzugt kleiner als 0,25, weiter bevorzugt kleiner als 0,1. Die Topschichtdicke ist demnach deutlich dünner als die Zwischenschichtdicke. Durch diese vorteilhafte Ausgestaltung ist die zwischen beiden Schichten angeordnete Reflexionsschicht durch die vergleichsweise dünne Topschicht geschützt, aber insgesamt immer noch verhältnismäßig nahe an der Oberfläche der Wärmedämmschicht angeordnet. Die Anordnung nahe an der Oberfläche der Wärmedämmschicht ist vorteilhaft, da auf diese Weise vergleichsweise viel Strahlung reflektiert wird. Die unter der Reflexionsschicht angeordnete Zwischenschicht verringert die thermische Belastung anschließend in bekannter Weise durch die thermisch isolierende Wirkung poröser Keramiken.

Ferner ist es bevorzugt, wenn das Verhältnis der Reflexionsschichtdicke zur Zwischenschichtdicke kleiner als 0,75, vorzugsweise kleiner als 0,5, weiter bevorzugt kleiner als 0,25 ist. Ein solches Verhältnis ist für die Wärmedämmschicht vorteilhaft, da ein signifikanter Anteil der Wärmestrahlung durch die vergleichsweise dünne Reflexionsschicht reflektiert wird und somit vorteilhafter Weise die Zwischenschicht nie erreicht und zusätzlich der Grundwerkstoff durch die vergleichsweise dicke thermische isolierende Zwischenschicht auch bei einer Beschädigung der Reflexionsschicht noch ausreichend geschützt bleibt. Zudem ist es vorteilhaft, eine verhältnismäßig dicke Zwischenschicht vorzusehen, da durch die Reflexionsschicht im Wesentlichen nur Strahlung reflektiert wird, zum Schutz vor dem großen Anteil an über Wärmeleitung übertragene Wärmeenergie ist jedoch die thermisch isolierende Zwischenschicht in der Regel besser geeignet.

Vorzugsweise weist der photonische Kristall eine dreidimensionale Periodizität auf. Das bedeutet, dass die den Kristall bildenden Strukturen, beispielsweise die globularen Hohlkörper, in drei Raumrichtungen periodisch angeordnet sind. Dies ist einerseits für das Reflexionsverhalten vorteilhaft, darüber hinaus kann durch diesen 3D periodischen Aufbau des photonischen Kristalls bei Gasturbinenbauteilen mit Kühlluftbohrungen eine laterale Diffusionskühlung erreicht werden. Die Kühlluft durchströmt beim Durchströmen der Kühlluftbohrung vorbei an der Wärmedämmschicht und damit passiert sie auch die Reflexionsschicht. Die dabei stattfindenden lateralen Kühleffekte zwischen Kühlluft und 3D Reflexionsschicht wirken sich vorteilhaft auf die wärmedämmende Wirkung der Wärmedämmschicht aus.

Erfindungsgemäß weist der photonische Kristall eine invertierte Opalstruktur auf. Die inverse Struktur bezeichnet regelmäßige sphärische Hohlvolumina, welche in einer dichtesten Packung angeordnet sind und dadurch bereits bei vergleichsweise geringen Dielektrizitätskonstanten eine photonische Bänderlücke aufweisen.

Die Topschicht weist vorzugsweise eine niedrigere Porosität als die Zwischenschicht auf. Eine niedrigere Porosität hat den Vorteil, dass sie einem CMAS Angriff entgegenwirkt. Bei einem CMAS (Calcium-Magnesium-Aluminium-Silicat) Angriff erfolgt eine strukturelle oder chemische Veränderung der Wärmedämmschicht in der Art, dass eine Schädigung, insbesondere eine Delamination, der keramischen Beschichtung induziert wird und so die schützende Wirkung der Wärmedämmschicht zum Teil oder vollständig verloren geht. Um eine dichte Topschicht mit geringer Porosität zu erzeugen, wird die Topschicht vorzugsweise mit einem EBPVD- (Electron Beam Physical Vapor Deposition) oder durch ein atmosphärisches Flamm- oder Plasmaspritzverfahren auf das Gasturbinenbauteil aufgebracht.

Vorzugsweise ist das keramische Material des photonischen Kristalls aus der Gruppe umfassend Zirkonoxid, teilstabilsiertes Zirkonoxid, vollstabilisiertes Zirkonoxid, Hafniumoxid, Ceriumoxid oder Aluminiumoxid ausgewählt. Die Teilstabilisierung des Zirkonoxids erfolgt dabei bevorzugt durch Yttriumoxid, Neodymoxid und/oder Ytterbiumoxid.

Das keramische Material des photonischen Kristalls kann auch vorzugsweise aus der Gruppe der Lanthanate, Perowskite, Pyrochlore oder Spinelle ausgewählt sein. Die Gruppe der Perowskite umfasst dabei beispielsweise Zirkonate wie CaZrO₃, SrZrO₃, BaZrO₃, (Ca, Sr)ZRO₃ und Aluminate wie LaAlO₃, GdAlO₃, (Gd,La)AlO₂. Die Gruppe der Pyrochlore umfasst beispielsweise La₂Zr₂O₇, La₂Hf₂O₇, Nd₂Zr₂O₇, Sm₂Zr₂O₇, Gd₂Zr₂O₇ und die Gruppe der Spinelle MgCr₂O₄, MgAl₂O₄, oder NiA₂O₄.

Unabhängig von der Gruppenzugehörigkeit können auch einzelne der aufgezählten Materialien für den photonischen Kristall bevorzugt sein.

Generell sind Oxidkeramiken als Material für den photonischen Kristall bevorzugt. Erfahrungsgemäß finden diese keramischen Materialien vielfach Einsatz in Wärmedämmschichten, so dass durch einen artgleichen photonischen Kristall eine gute Verträglichkeit mit den üblichen Wärmedämmschichten erreicht werden kann.

Erfindungsgemäß wird zur Lösung der Aufgabe auch ein Gasturbinenbauteil mit mehreren übereinander angeordneten Schichtlagen vorgeschlagen, wobei die Wärmedämmschicht wie zuvor beschrieben ausgestaltet ist. Ein erfindungsgemäßes Gasturbinenbauteil ist durch die erfindungsgemäße Wärmedämmschicht besonders gut vor thermischen Belastungen geschützt. Bei dem Gasturbinenbauteil handelt es sich bevorzugt um ein Brennkammer- und/oder Hochdruckturbinenbauteil mit einem Werkstoff auf Nickel- oder Kobaltbasis, welches durch die erfindungsgemäße Wärmedämmschicht besonders gut für den Einsatz in heißen Regionen der Gasturbine geeignet ist. Der Schichtaufbau eignet sich besonders zur Beschichtung von Bauteilen auf Nickel- oder Kobaltbasis, insbesondere für Superlegierungen auf Nickel- oder Kobaltbasis. Weiterhin ist der Schichtaufbau auch vorzugsweise zur Beschichtung von Gasturbinenbauteilen geeignet, die einen keramischen Faserverbundwerkstoff (CMC) und/oder Siliziumcarbid und/oder Aluminiumoxid umfassen. Dabei werden vorzugsweise Aluminiumoxide und Siliziumcarbide als Matrixwerkstoff eingesetzt. Die Fasern können dabei auch vorzugsweise aus Siliziumcarbid gebildet sein. Eine solche Kombination von Siliziumcarbid Matrix und Fasern ist beispielsweise unter dem Handelsnamen Sylramic bekannt. Bei einer Matrix aus Aluminiumoxid werden vorzugsweise Gewebe aus Aluminium- und/oder Siliziumoxidfasern vorgesehen, eine solche bevorzugte Materialkombination ist beispielsweise unter dem Handelsnamen Nextel 550 bekannt.

Weiterhin wird erfindungsgemäß auch ein Verfahren zum Beschichten eines Gasturbinenbauteils vorgeschlagen, wobei durch das Verfahren eine wie zuvor beschriebene Wärmedämmschicht auf das Gasturbinenbauteil aufgebracht wird. Vorzugsweise wird die Reflexionsschicht mit dem photonischen Kristall durch ein Sol-Gel Verfahren mittels kolloider Selbstorganisation auf das Gasturbinenbauteil aufgebracht. Dabei werden viele einzelne Partikel in einer Lösung auf das Bauteil aufgebracht, die dann aus energetischen Gründen in Selbstorganisation eine strukturierte Vorstufe der Reflexionsschicht ausbilden. In einem nächsten Schritt wird die Schicht verfestigt, so dass am Ende eine stabile geordnete Schicht entsteht.

Alternativ kann der photonische Kristall auch durch ein lithographisches Verfahren auf das Gasturbinenbauteil aufgebracht werden. Bei einem lithographischen Verfahren werden in verschiedenen Schritten gezielt Strukturen durch mehrfache Beschichtungs- und Ätzprozesse erzeugt. Dabei kommen üblicherweise Belichtungsmasken zum Einsatz, die die zu bildenden Strukturen vorgeben.

Die Erfindung wird im Folgenden anhand bevorzugter Ausführungsformen unter Bezugnahme auf die beigefügten Figuren erläutert. Dabei zeigt:
- Fig. 1: einen erfindungsgemäßen Wärmedämmschichtaufbau auf einem Gasturbinenbauteil;
- Fig. 2: eine Darstellung des 3D periodischen photonischen Kristalls der Reflexionsschicht.

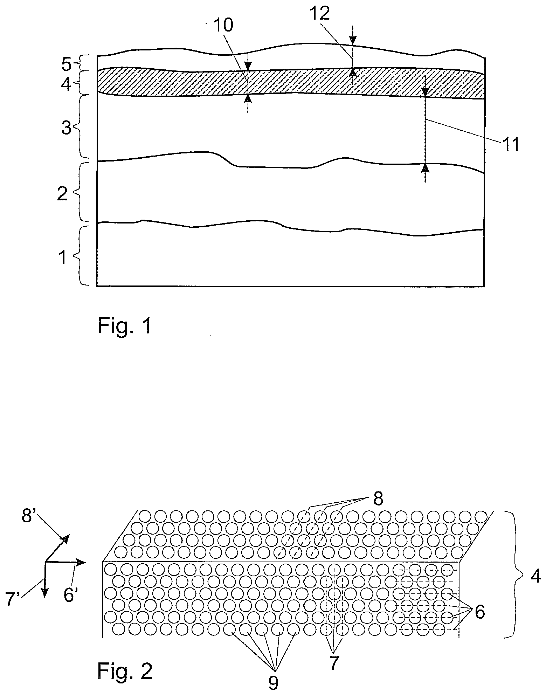

In der Figur 1 ist eine erfindungsgemäße Wärmedämmschicht auf einem Gasturbinenbauteil in einer Schnittansicht dargestellt. Auf den Grundwerkstoff 1 des Gasturbinenbauteils, welches in diesem Ausführungsbeispiel ein Brennkammerbauteil aus einer Nickelbasislegierung ist, sind nacheinander eine Haftschicht 2, eine Zwischenschicht 3, eine Reflexionsschicht 4 und eine Topschicht 5 aufgebracht.

Die Haftschicht 2 ist metallisch, es handelt sich um eine durch atmosphärisches Plasmaspritzen oder Hochgeschwindigkeitsflammspritzen aufgebrachte "MCrAlY" Haftschicht. Derartige Haftschichten sind bekannt, um metallisches Grundwerkstoffmaterial mit porösen keramischen Schichten zu verbinden. Durch die Haftschicht wird das Risiko eines ungewollten Abplatzens von keramischen Schichtlagen reduziert. Neben der "MCrAlY" Haftschicht können auch Diffusionsbeschichtungen, beispielsweise Alitierungen oder Chromierungen vorgesehen werden, welche bevorzugt mittels chemischer Gasphasenabscheidung appliziert werden.

Oberhalb der Haftschicht 2 ist eine poröse keramische Zwischenschicht 3 angeordnet. In diesem Ausführungsbeispiel handelt es sich hierbei um Yttrium-teilstabilisiertes Zirkonoxid, welches im atmosphärischen Plasmaspritzverfahren als poröse Keramikbeschichtung auf die Haftschicht 2 aufgebracht wurde.

Die Haftschicht 2, die Zwischenschicht 3 und die Topschicht 5 können bevorzugt auch durch physikalische Gasphasenabscheidung (PVD), vorzugsweise unter Einsatz eines Elektronenstrahls (EBPVD), appliziert werden. Darüber hinaus kann dazu auch das Atomlagenabscheideverfahren eingesetzt werden. Dabei werden einzelne Atomlagen nacheinander mittels chemischer Gasphasenabscheidung appliziert.

Als nächstes folgt im Schichtaufbau die Reflexionsschicht 4, welche durch einen photonischen Kristall aus keramischem Material gebildet ist. Als keramisches Material für den photonischen Kristall kommen generell Oxidkeramiken, insbesondere Aluminate, Pyrochlore und Perowskite in Frage.

Die Reflexionsschicht 4 ist in diesem Ausführungsbeispiel durch kolloide Selbstorganisation in einem Sol-Gel Verfahren aufgebracht. Anders als für die Zwischenschicht 3 oder die Topschicht 5, eignet sich das atmosphärische Flamm- oder Plasmaspritzen nicht, um eine Reflexionsschicht 4 mit einem photonischen Kristall zu applizieren. Zum Aufbringen der Reflexionsschicht 4 können beispielsweise auch Schaumherstellungsverfahren eingesetzt werden. Dabei können beispielsweise beschichtete Polymerkugeln vorgesehen werden, wobei die Polymerkerne durch Hitzeeinwirkung verbrannt werden und so die den photonischen Kristall bildenden Hohlkugeln zurückbleiben.

Die Reflexionsschicht 4 mit photonischem Kristall ist in der Figur 2 genauer dargestellt. Eine Vielzahl keramischer globulärer Hohlkörper 9, vorzugsweise aus Yttrium-teilstabilisiertem Zirkonoxid, sind in einer ersten, zweiten und dritten Raumrichtung 6', 7', 8' "3D periodisch" nebeneinander angeordnet. Es wird also eine erste Periodizität 6 in der ersten Raumrichtung 6', eine zweite Periodizität 7 in einer zweiten Raumrichtung 7' und eine dritte Periodizität 8 in einer dritten Raumrichtung 8' ausgebildet. Durch diese 3D periodische Struktur kann thermische Strahlung besonders gut von der Reflexionsschicht 4 reflektiert werden.

Als oberste Schichtlage der Wärmedämmschicht wird eine keramische Topschicht 5 vorgesehen. In diesem Ausführungsbeispiel ist sie direkt auf die Reflexionsschicht 4 aufgebracht. Die Topschicht 5 ist aus einer porösen Keramik, beispielsweise aus Yttrium-teilstabilisiertem Zirkonoxid. Die Porosität der Topschicht 5 kann dabei genauso groß wie die Porosität der Zwischenschicht 3 sein. Es ist jedoch bevorzugt, die Topschicht 5 weniger porös auszuführen, um dem weiter oben beschriebenen CMAS Angriff entgegenzuwirken.

Die Dicken der Zwischenschicht 3, der Reflexionsschicht 4 und der Topschicht 5 sind in der Figur 1 als Zwischenschichtdicke 11, die Reflexionsschichtdicke 10 und die Topschichtdicke 12 eingetragen. Die Dicken der Schichten sind nicht immer konstant, insofern kann jeweils von einer mittleren Schichtdicke ausgegangen werden. Es ist in der Darstellung der Figur 1 klar zu erkennen, dass die Topschichtdicke 12 und die Reflexionsschichtdicke 10 beide geringer sind als die Zwischenschichtdicke 11.

In diesem Ausführungsbeispiel ist das Verhältnis der Reflexionsschichtdicke 10 zur Zwischenschichtdicke 11 kleiner als 0,25 und das Verhältnis der Topschichtdicke 12 zur Zwischenschichtdicke 11 kleiner als 0,5.

### Bezugszeichenliste:

- 1: Grundwerkstoff
- 2: Haftschicht
- 3: Zwischenschicht
- 4: Reflexionsschicht
- 5: Topschicht
- 6: erste Periodizität
- 6': erste Raumrichtung
- 7: zweite Periodizität
- 7': zweite Raumrichtung
- 8: dritte Periodizität
- 8': dritte Raumrichtung
- 9: Hohlkörper
- 10: Reflexionsschichtdicke
- 11: Zwischenschichtdicke
- 12: Topschichtdicke

## Patentansprüche

1. Wärmedämmschicht für ein Gasturbinenbauteil mit mehreren übereinander angeordneten Schichtlagen, wobei die Wärmedämmschicht ausgehend vom Grundwerkstoff (1) des Gasturbinenbauteils nacheinander die Schichtlagen
a) eine metallische Haftschicht (2)
b) eine poröse keramische Zwischenschicht (3)
c) eine Reflexionsschicht (4)
d) eine keramische Topschicht (5)
aufweist, **dadurch gekennzeichnet, dass**
die Reflexionsschicht (4) durch einen photonischen Kristall aus keramischem Material gebildet ist, der periodische Strukturen globularer Hohlkörper (9) mit einer invertierten Opalstruktur aufweist.

2. Wärmedämmschicht nach Anspruch 1, **dadurch gekennzeichnet, dass** das Verhältnis der Topschichtdicke (12) zur Zwischenschichtdicke (11) kleiner als 0,5 ist.

3. Wärmedämmschicht nach einem der vorangegangenen Ansprüche, **dadurch gekennzeichnet, dass** das Verhältnis der Reflexionsschichtdicke (10) zur Zwischenschichtdicke (11) kleiner als 0,25 ist.

4. Wärmedämmschicht nach einem der vorangegangenen Ansprüche, **dadurch gekennzeichnet, dass** der photonische Kristall eine dreidimensionale Periodizität aufweist.

5. Wärmedämmschicht nach einem der vorangegangenen Ansprüche, **dadurch gekennzeichnet, dass** die Topschicht (5) eine niedrigere Porosität als die Zwischenschicht (3) aufweist.

6. Wärmedämmschicht nach einem der vorangegangenen Ansprüche, **dadurch gekennzeichnet, dass** das keramische Material des photonischen Kristalls aus der Gruppe umfassend Zirkonoxid, teilstabilsiertes Zirkonoxid, vollstabilisiertes Zirkonoxid, Hafniumoxid, Ceriumoxid oder Aluminiumoxid ausgewählt ist.

7. Wärmedämmschicht nach einem der vorangegangenen Ansprüche, **dadurch gekennzeichnet, dass** das keramische Material des photonischen Kristalls aus der Gruppe umfassend Lanthanate, Perowskite, Pyrochlore oder Spinelle ausgewählt ist.

8. Gasturbinenbauteil mit einer Wärmedämmschicht mit mehreren übereinander angeordneten Schichtlagen, **dadurch gekennzeichnet, dass** die Wärmedämmschicht gemäß einem der Ansprüche 1 bis 7 ausgestaltet ist.

9. Gasturbinenbauteil nach Anspruch 8, **dadurch gekennzeichnet, dass** das Gasturbinenbauteil ein Brennkammer- und/oder Hochdruckturbinenbauteil mit einem Werkstoff auf Nickel- oder Kobaltbasis ist.

10. Gasturbinenbauteil nach Anspruch 8 oder 9, **dadurch gekennzeichnet, dass** das Gasturbinenbauteil einen keramischen Faserverbundwerkstoff und/oder Siliziumcarbid und/oder Aluminiumoxid umfasst.

11. Verfahren zum Beschichten eines Gasturbinenbauteils, **dadurch gekennzeichnet, dass** durch das Verfahren eine Wärmedämmschicht gemäß einem der Ansprüche 1 bis 7 auf das Gasturbinenbauteil aufgebracht wird.

12. Verfahren nach Anspruch 11, **dadurch gekennzeichnet, dass** die Reflexionsschicht mit dem photonischen Kristall durch ein Sol-Gel Verfahren mittels kolloider Selbstorganisation auf das Gasturbinenbauteil aufgebracht wird.

13. Verfahren nach Anspruch 11, **dadurch gekennzeichnet, dass** der photonische Kristall durch ein lithographisches Verfahren auf das Gasturbinenbauteil aufgebracht wird.

## Claims

1. Thermal barrier coating for a gas turbine component, comprising a plurality of superimposed layers, the thermal barrier coating comprising the following layers, one after another proceeding from the base material (1) of the gas turbine component,
a) a metallic bond layer (2)
b) a porous ceramic intermediate layer (3)
c) a reflective layer (4)
d) a ceramic top layer (5)
**characterised in that** the reflective layer (4) is formed by a photonic crystal formed of ceramic material and comprises periodic structures of globular hollow bodies (9) having an inverted opal structure.

2. Thermal barrier coating according to claim 1, **characterised in that** the ratio of the top layer thickness (12) to the intermediate layer thickness (11) is less than 0.5.

3. Thermal barrier coating according to any of the preceding claims, **characterised in that** the ratio of the reflective layer thickness (10) to the intermediate layer thickness (11) is less than 0.25.

4. Thermal barrier coating according to any of the preceding claims, **characterised in that** the photonic crystal has a three-dimensional periodicity.

5. Thermal barrier coating according to any of the preceding claims, **characterised in that** the top layer (5) is less porous than the intermediate layer (3).

6. Thermal barrier coating according to any of the preceding claims, **characterised in that** the ceramic material of the photonic crystal is chosen from the group comprising zirconium oxide, partially stabilised zirconium oxide, fully stabilised zirconium oxide, hafnium oxide, cerium oxide or aluminium oxide.

7. Thermal barrier coating according to any of the preceding claims, **characterised in that** the ceramic material of the photonic crystal is chosen from the group comprising lanthanates, perovskites, pyrochlores or spinels.

8. Gas turbine component comprising a thermal barrier coating having a plurality of superimposed layers, **characterised in that** the thermal barrier coating is designed according to any of claims 1 to 7.

9. Gas turbine component according to claim 8, **characterised in that** the gas turbine component is a combustor component and/or a high-pressure turbine component comprising a nickel-based or cobalt-based material.

10. Gas turbine component according to either claim 8 or claim 9, **characterised in that** the gas turbine component comprises a ceramic fibre composite material and/or silicon carbide and/or aluminium oxide.

11. Method for coating a gas turbine component, **characterised in that** a thermal barrier coating according to any of claims 1 to 7 is applied to the gas turbine component by means of the method.

12. Method according to claim 11, **characterised in that** the reflective layer having the photonic crystal is applied to the gas turbine component by means of a sol-gel method by means of colloidal self-organisation.

13. Method according to claim 11, **characterised in that** the photonic crystal is applied to the gas turbine component by means of a lithographic method.

## Revendications

1. Couche de barrière thermique pour un composant de turbine à gaz avec plusieurs couches de revêtement disposées les unes au-dessus des autres, la couche de barrière thermique comportant successivement, en partant du matériau de base (1) du composant de turbine à gaz, les couches de revêtement suivantes :
a) une couche adhésive (2) métallique
b) une couche intermédiaire (3) céramique poreuse
c) une couche réfléchissante (4)
d) une couche supérieure (5) céramique
**caractérisée en ce que** la couche réfléchissante (4) est formée d'un cristal photonique en matériau céramique qui comporte des structures périodiques de cavités (9) globulaires avec une structure opaline inversée.

2. Couche de barrière thermique selon la revendication 1, **caractérisée en ce que** le rapport de l'épaisseur (12) de la couche supérieure à l'épaisseur (11) de la couche intermédiaire est inférieur à 0,5.

3. Couche de barrière thermique selon l'une des revendications précédentes, **caractérisée en ce que** le rapport de l'épaisseur (10) de la couche réfléchissante à l'épaisseur (11) de la couche intermédiaire est inférieur à 0,25.

4. Couche de barrière thermique selon l'une des revendications précédentes, **caractérisée en ce que** le cristal photonique présente une périodicité tridimensionnelle.

5. Couche de barrière thermique selon l'une des revendications précédentes, **caractérisée en ce que** la couche supérieure (5) présente une porosité plus faible que la couche intermédiaire (3).

6. Couche de barrière thermique selon l'une des revendications précédentes, **caractérisée en ce que** le matériau céramique du cristal photonique est sélectionné dans le groupe comprenant l'oxyde de zirconium, l'oxyde de zirconium partiellement stabilisé, l'oxyde de zirconium totalement stabilisé, l'oxyde d'hafnium, l'oxyde de cérium ou l'oxyde d'aluminium.

7. Couche de barrière thermique selon l'une des revendications précédentes, **caractérisée en ce que** le matériau céramique du cristal photonique est sélectionné dans le groupe comprenant des lanthanates, des perovskites, des pyrochlores ou des spinelles.

8. Composant de turbine à gaz avec une couche de barrière thermique avec plusieurs couches de revêtement disposées les unes au-dessus des autres, **caractérisé en ce que** la couche de barrière thermique est constituée selon l'une des revendications 1 à 7.

9. Composant de turbine à gaz selon la revendication 8, **caractérisé en ce que** le composant de turbine à gaz est un composant de chambre de combustion et/ou de turbine haute pression avec un matériau à base de nickel ou de cobalt.

10. Composant de turbine à gaz selon la revendication 8 ou 9, **caractérisé en ce que** le composant de turbine à gaz comporte un matériau composite à fibres céramique et/ou un carbure de silicium et/ou un oxyde d'aluminium.

11. Procédé de revêtement d'un composant de turbine à gaz, **caractérisé en ce que**, par le procédé, une couche de barrière thermique selon l'une des revendications 1 à 7 est appliquée sur le composant de turbine à gaz.

12. Procédé selon la revendication 11, **caractérisé en ce que** la couche réfléchissante avec le cristal photonique est appliquée sur le composant de turbine à gaz par un procédé sol-gel au moyen d'un auto-assemblage colloïdal.

13. Procédé selon la revendication 11, **caractérisé en ce que** le cristal photonique est appliqué sur le composant de turbine à gaz par un procédé lithographique.
